# EUROPÄISCHE PATENTANMELDUNG

(11) **EP 1 520 465 A1**
(43) Veröffentlichungstag der Anmeldung: **06.04.2005**
(21) Anmeldenummer: 04021510.5
(22) Anmeldetag: 10.09.2004
(51) Int. Cl.: A01D 75/28

(54) **Verfahren zur Bodenkopierung für Vorsatzgeräte**

(30) Priorität: 30.09.2003 DE 10345822
(71) Anmelder: CLAAS Selbstfahrende Erntemaschinen GmbH, 33428 Harsewinkel (DE)
(72) Erfinder: Hugenroth, Ludger, 48346 Ostbevern (DE)

(57) **Zusammenfassung**

Verfahren und Vorrichtung zur Bodenkopierung für Vorsatzgeräte (2) an einer landwirtschaftlichen Arbeitsmaschine (1), mit einem Maschinengestell (5) und einem Hangausgleichssystem (19), mit der das Maschinengestell (5) gegenüber einer Fahrebene (14) ausrichtbar ist sowie einem frontseitigem Vorsatzgerät (2), das an einem höhenveränderlichen Schrägförderer (4) angeordnet ist und einer Steuerung (35) mit der das Vorsatzgerät (2) bodenkopierend verschwenkbar ist, wobei die bodenkopierende Steuerung (35) des Vorsatzgerätes (2) die Lageänderung der Arbeitsmaschine (1) gegenüber der Fahrebene (14) berücksichtigt. Auf diese Weise wird es möglich, den Regelaufwand für die bodenkopierende Führung eines Vorsatzgerätes (2) an lageveränderlich ausgeführten Arbeitsmaschinen (1) zu reduzieren und dennoch eine wirkungsvolle Bodenkopierfunktion des Vorsatzgerätes (2) zu gewährleisten.

## Beschreibung

Die Erfindung betrifft ein Verfahren und eine Vorrichtung zur Bodenkopierung für Vorsatzgeräte an einer landwirtschaftlichen Erntemaschine nach den Oberbegriffen der Ansprüche 1 und 15.

Aus der DE 197 27 570 C1 ist eine Erntemaschine mit einer höhenverschwenkbaren Aufnahmevorrichtung und einer Hangausgleichseinrichtung bekannt. Die Hangausgleichseinrichtung und die Aufnahmevorrichtung werden über eine Abtastvorrichtung an der Aufnahmevorrichtung gesteuert, die die Schnitthöhe zwischen Boden und Aufnahmevorrichtung misst. Die Lage der Aufnahmevorrichtung ist mit dem höhenverschwenkbaren Förderkanal in Fahrtrichtung und mit der Hangausgleichseinrichtung quer zur Fahrtrichtung einstellbar.

Nachteilig bei dieser Ausführung ist, dass bei der Anpassung der Aufnahmevorrichtung quer zur Fahrtrichtung das Maschinengestell des Mähdreschers aus der Waagerechten geneigt wird, wodurch die im Maschinengestell angeordneten Arbeitsorgane aus einer für ihre optimale Funktion erforderlichen Position geschwenkt werden.

Der Erfindung liegt daher die Aufgabe zugrunde ein Verfahren und zugehörige Vorrichtung- zur Bodenkopierung für Vorsatzgeräte an einer landwirtschaftlichen Arbeitsmaschine derart weiterzuentwickeln, dass das Maschinengestell durch die Hangausgleichseinrichtung in einer waagerechten Position gehalten wird, und bei dem der sich dadurch ändernde Abstand des Maschinengestells zur Fahrebene beim Bodenkopieren berücksichtigt wird.

Diese Aufgabe wird erfindungsgemäß durch die kennzeichnenden Merkmale der Ansprüchen 1 und 15 gelöst. Weitere vorteilhafte Ausführungen des Erfindungsgegenstandes ergeben sich aus den übrigen Ansprüchen.

Indem die bodenkopierende Steuerung des Vorsatzgerätes die Lageänderung der Arbeitsmaschine gegenüber der Fahrebene berücksichtigt, wird sichergestellt, dass trotz sich ändernder Lage der Arbeitsmaschine eine wirkungsvolle Bodenkopierfunktion des Vorsatzgerätes bei vertretbarem Regelaufwand gewährleistet ist.

Auf konstruktiv einfache Weise kann die Lageänderung der Arbeitsmaschine zur Fahrebene dadurch ermittelt werden, dass die Stellung des zumindest einen Hangausgleichssystems gegenüber dem Maschinengestell bestimmt wird und/oder dem Maschinengestell die Neigung der Arbeitsmaschine sensierende Neigungssensoren zugeordnet sind.

Die Stellung des Hangausgleichssystems kann auf konstruktiv einfache und damit kostengünstige Weise durch die Verwendung von Drehwinkelsensoren erreicht werden, die die Stellung des Hangausgleichssystems in Neigungssignalen abbilden.

In vorteilhafter Weiterbildung der Erfindung ist das Hangausgleichssystem schwenkbeweglich mit der Vorderachse der Arbeitsmaschine gekoppelt und der Drehwinkelsensor zwischen einem Radgetriebe des Hangausgleichssystems und der Vorderachse der Arbeitsmaschine angeordnet.

Damit auch die momentane Position des Schrägförderers in die bodenkopierende Steuerung des Vorsatzgerätes einbezogen werden kann, ist dem Schrägförderer im einfachsten Fall ebenfalls ein Drehwinkelsensor zugeordnet, der die Neigung des Schrägförderers in Neigungssignalen abbildet. Dies kann auf konstruktiv einfache Weise dadurch realisiert werden, dass der Neigungssensor im Bereich der Drehachse des Schrägförderers angeordnet ist und einen Drehwinkel zwischen dem Schrägförderer und dem Maschinengestell der Arbeitsmaschine detektiert.

Die bodenkopierende Funktion des Vorsatzgerätes kann auch dadurch weiter verbessert werden, dass sowohl die Längs- als auch die Querneigungen der Arbeitmaschine berücksichtigt werden und diese im einfachsten Fall durch mit dem Maschinengestell der Arbeitsmaschine verbunden Neigungssensoren ermittelbar sind.

Eine sehr präzise Bodenkopierung des Vorsatzgerätes wird dann erreicht, wenn das Vorsatzgerät sowohl Längs- als auch Querneigungen ausgleichen kann. Unter Ausnutzung an sich bekannter Systeme kann dies auf einfache Weise dadurch erreicht werden, dass der Längsneigungsausgleich des Vorsatzgerätes durch Verschwenken des Schrägförderers und der Querneigungsausgleich durch Verschwenken des Vorsatzgerätes quer zur Fahrtrichtung und relativ zum Schrägförderer erfolgt.

Eine einfache Struktur der Regelung der bodenkopierenden Funktion des Vorsatzgerätes ergibt sich dann, wenn die Ist-Schnitthöhe und der Ist-Auflagedruck in Abhängigkeit von editierbaren Soll-Schnitthöhen und Soll-Auflagedrücken geregelt wird und wobei die Steuerung zur Realisierung dieses Regelprozesses über ein Rechnermodul und ein diesem zugeordnetes Speichermodul verfügt.

Eine übersichtlich strukturierte und einfach umsetzbare Regelung wird dann erreicht, wenn die Steuerung die Soll-Schnitthöhe und den Soll-Auflagedruck unter Einbeziehung der Neigungssignale der Drehwinkelsensoren des Hangausgleichssystems und der Neigungssignale des Drehwinkelsensors des Schrägförderers in dem Rechnermodul zu einer korrigierten Soll-Schnitthöhe und einem korrigierten Soll-Auflagedruck verrechnet und diese dann die Zielwerte der bodenkopierenden Steuerung des Vorsatzgerätes bilden.

In vorteilhafter Weiterbildung der Erfindung wird die vertikale Lageänderung des Vorsatzgerätes durch Druckbeaufschlagung oder Druckentlastung von den Schrägförderer schwenkbeweglich führenden Hubzylindern und die Lageänderung des Vorsatzgerätes quer zur Fahrtrichtung durch Druckbeaufschlagung oder Druckentlastung von das Vorsatzgerät pendelnd an dem Schrägförderer führenden Hubzylindern realisiert. Dabei generiert im einfachsten Fall die Steuereinrichtung die zur Druckbeaufschlagung oder Druckentlastung erforderlichen Steuerbefehle.

Eine konstruktiv einfache Umsetzung des erfindungsgemäßen Verfahrens wird dann erreicht, wenn der Arbeitsmaschine ein oder mehrere Sensoren zur Bestimmung der Lage der Arbeitsmaschine und/oder des zumindest einen Hangausgleichssystems zugeordnet sind und die von diesen Sensoren generierten Signale an die Steuereinheit übergeben werden, wobei in der Steuereinheit Soll-Schnitthöhen und Soll-Auflagedrücke editierbar hinterlegt sind und in der Steuereinheit in Abhängigkeit von den Signalen korrigierte Soll-Schnitthöhen und korrigierte Soll-Auflagedrücke sowie Steuerbefehle an das Vorsatzgerät höhen- und querbeweglich führende Verstellelemente übermittel werden, sodass die bodenkopierende Führung des Vorsatzgerätes in Abhängigkeit von der Lageänderung der Arbeitsmaschine erfolgt.

Weitere vorteilhafte Ausführungen sind Gegenstand weiterer Unteransprüche und werden nachfolgend an Hand eines in mehreren Figuren dargestellten Ausführungsbeispiels beschrieben. Es zeigen:
- Figur 1: den vorderen Bereich einer landwirtschaftlichen Arbeitsmaschine mit erfindungsgemäßer Steuereinrichtung in Seitenansicht

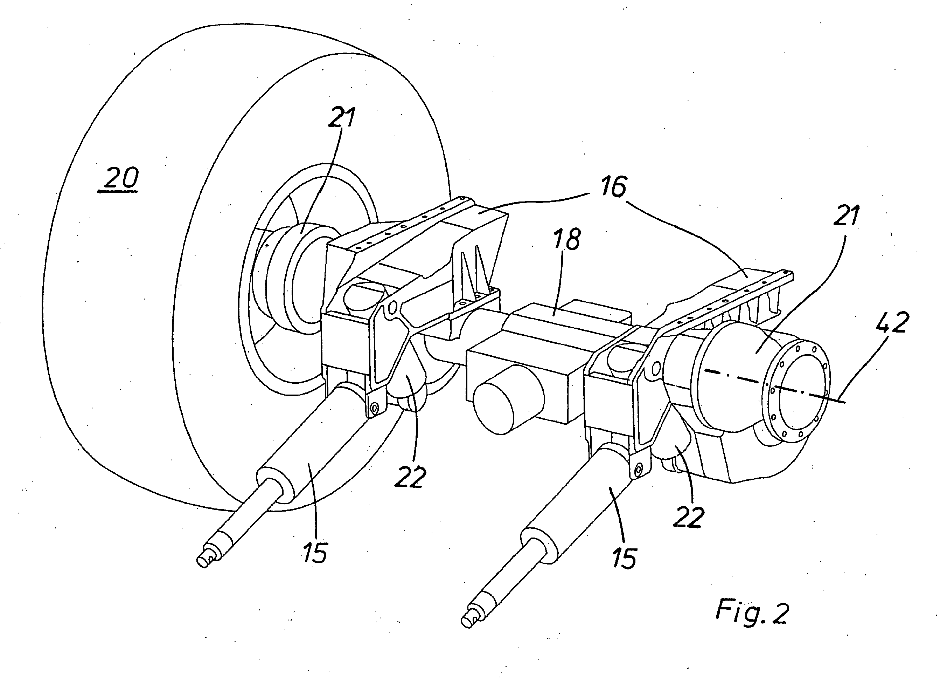

- Figur 2: eine Detailansicht der Vorderachse der landwirtschaftlichen Arbeitsmaschine nach Figur 1 mit Hangausgleichssystem

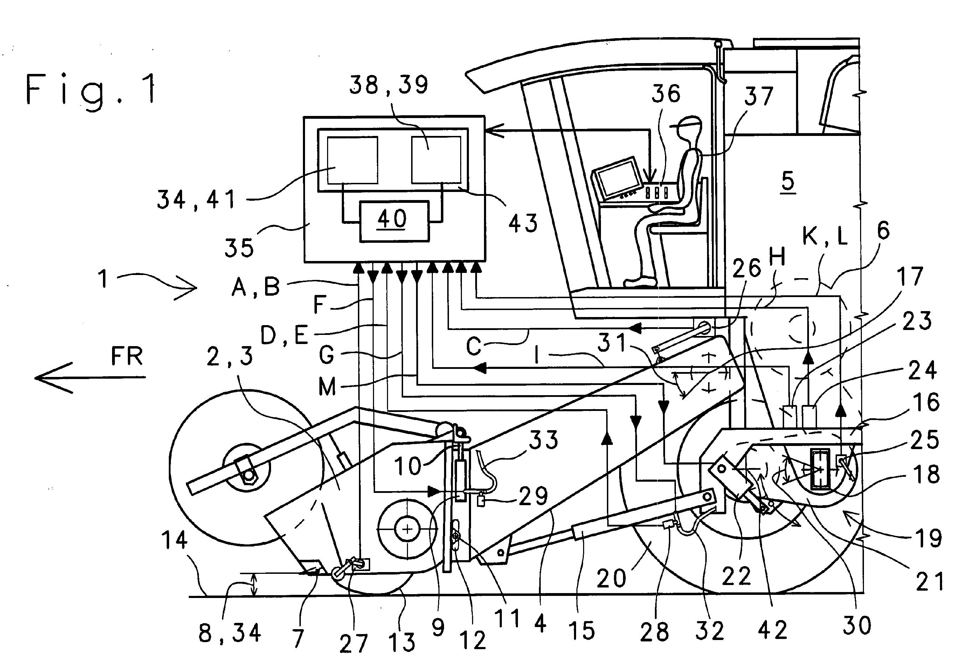

Die in Fig.1 teilweise dargestellte, als Mähdrescher ausgeführte landwirtschaftliche Arbeitsmaschine 1 nimmt frontseitig ein als Getreideschneidwerk 3 ausgeführtes Vorsatzgerät 2 auf, welches das auf dem Feld gewachsene Erntegut mäht und anschließend einem Schrägförderer 4 zuführt. Der Schrägförderer 4 übergibt das Erntegut an sich bekannten und daher hier nicht näher erläuterten im Maschinengestell 5 des Mähdreschers 1 angeordneten Arbeitsorganen 6.

Damit die Schneideinrichtung 7 des Vorsatzgerätes 2 eine definierte Schnitthöhe 8 einhalten kann wird das Vorsatzgerät 2 in noch näher zu beschreibender Weise von dem Schrägförderer 4 lageveränderlich geführt. Hierfür sind dem Schrägförderer 4 in seinem frontseitigen Bereich beidseitig im wesentlichen vertikal ausgerichtete Hubzylinder 9 zugeordnet, deren Kolbenstangen 10 an ihren freien Enden gelenkig mit dem rückwärtigen Bereich des Vorsatzgerätes 2 gekoppelt sind, sodass eine Druckbeaufschlagung oder Druckentlastung der jeweiligen Hubzylinder 10 zu einem Anheben oder Absenken des Vorsatzgerätes 2 quer zur Fahrtrichtung FR führt. Damit bei dieser Relativbewegung des Vorsatzgerätes 2 gegenüber dem Schrägförderer 4 dennoch beide bündig einander kontaktieren ist das Vorsatzgerät 2 beidseitig über Führungsbolzen 11 mit in den frontseitigen Bereich des Schrägförderers 4 eingearbeiteten Langlochführungen 12 verbunden. Zudem verfügt das Vorsatzgerät 2 in an sich bekannter Weise über ein oder mehrere unterhalb des Vorsatzgerätes 2 an diesem fixierte Tastbügel 13, die in noch näher zu beschreibender Weise durch Verschwenken das Profil der Fahrebene 14 registrieren.

Zudem wird der Schrägförderer 4 über Hubzylinder 15, die einenends schwenkbeweglich an Konsolen 16 des Trägerfahrzeugs 1 und kolbenstangenseitig schwenkbeweglich mit dem Schrägförderer 4 verbunden sind um eine quer zur Fahrtrichtung FR angeordnete Schwenkachse 17 verschwenkbar geführt.

In erfindungsgemäßer Weise nimmt die Vorderachse 18 des Mähdreschers 1 ein sogenanntes Hangausgleichssystem 19 auf, wobei im dargestellten Ausführungsbeispiel jedem Laufrad 20 ein solches Hangausgleichssystem 19 zugeordnet ist. Jedes Hangausgleichsystem 19 wird im wesentlichen von einem mit dem jeweiligen Laufrad 20 in Wirkverbindung stehenden Radgetriebe 21 gebildet, welches um die Vorderachse 18 des Mähdreschers 1 verschwenkbar an dieser angeordnet ist. Die Verschwenkbarkeit der Radgetriebe 21 wird dadurch erreicht, dass den die Hubzylinder 15 des Schrägförderers 4 abstützenden Konsolen 16 weitere Hubzylinder 22 zugeordnet sind, die kolbenstangenseitig mit den Radgetrieben 21 gelenkig verbunden sind, sodass deren Druckbeaufschlagung oder Druckentlastung zu einem Verschwenken der Radgetriebe 21 im oder entgegen dem Uhrzeigersinn um die Vorderachse 18 des Mähdreschers 1 führt. Indem die Radgetriebe 21 in der beschrieben Weise um die Vorderachse 18 des Trägerfahrzeugs 1 verschwenkt werden ändern zugleich die mit dem jeweiligen Radgetriebe 21 verbundenen Laufräder 20 ihre Position am Mähdrescher 1 sowohl in vertikaler als auch horizontal Richtung. Auf diese Weise wird es möglich, dass Unebenheiten der Fahrebene 14, wie dies regelmäßig in hängigem Gelände auftritt, ausgeglichen werden können, sodass die nicht näher beschriebenen Arbeitsorgane 6 des Mähdreschers 1, deren Leistungsfähigkeit zum Teil erheblich von einer ebenen Ausrichtung abhängt, auch in hängigem Gelände annähernd horizontal ausgerichtet sind.

Zur Realisierung des erfindungsgemäßen Verfahrens sind dem Mähdrescher 1 an diversen Positionen in noch näher zu beschreibender Weise Sensoren 23-28 zugeordnet. Hierzu zählen zunächst sogenannte Neigungssensoren 23, 24, die fest mit dem Maschinengestell 5 verbunden sind und in an sich bekannter Weise die Neigung des Trägerfahrzeugs 1 sensieren. Um die Laufräder 20 in Abhängigkeit von der Profilierung der Fahrebene 14 zielgerichtet verschwenken zu können, ist es erforderlich, dass die momentane Position der Laufräder 20 bekannt ist. Hierfür sind der Vorderachse 18 des Trägerfahrzeugs 1 Drehwinkelsensoren 25 zugeordnet, die den Verschwenkwinkel 30 der Radgetriebe 21 und damit der Laufräder 20 gegenüber der Vorderachse 18 ermitteln. Damit ferner die Position des mit dem Schrägförderer 4 verbundenen Vorsatzgerätes 2 bestimmbar wird, ist der Schwenkachse 17 des Schrägförderers 4 ebenfalls ein Drehwinkelsensor 26 zugeordnet, der die Bestimmung des Neigungswinkels 31 des Schrägförderschachtes 4 in Bezug auf das Maschinengestell 5 ermöglicht. Damit die bereits beschriebenen Tastbügel 13 zur Relieferkennung der Fahrebene 14 und damit zur Bestimmung der Ist-Schnitthöhe 8 herangezogen werden können sind die Tastbügel 13 über Drehpotentiometer 27 an dem Vorsatzgerät 2 befestigt. In an sich bekannter Weise sind dem Druckmittelleitungssystem 32 der den Schrägförderer 4 verschwenkenden Hubzylinder 15 Drucksensoren 28 zur Ermittlung des Hydraulikdruckes in dem Leitungssystem 32 zugeordnet. Zudem verfügen die Druckmittelleitungssysteme 33 der eine Relativbewegung des Vorsatzgerätes 2 zum Schrägförderschacht 4 ermöglichenden Hubzylinder 9 über Drucksensoren 29, die die in diesen Leitungssystemen 33 herrschenden Druckverhältnisse ermitteln können.

Die bodenkopierende Funktion des Vorsatzgerätes 2 wird dadurch erreicht, dass die Lage des Vorsatzgerätes 2, die Position des Schrägförderers 4 sowie der durch das Vorsatzgerät 2 verursachte Druck auf den Boden 14 registriert werden und in einer noch näher zu beschreibenden Regelung eine von einer voreinstellbaren Schnitthöhe abhängige Ist-Schnitthöhe 34 einregelt. Dies erfolgt im einfachsten Fall in der Weise, dass die von den Drehpotentiometern 27 der Tastbügel 13 generierten Bodenabstandssignale A, B, die von dem Drehwinkelsensor 26 des Schrägförderers 4 generierten Neigungssignale C und die von den Drucksensoren 28 der den Schrägförderer 4 verschwenkenden Hubzylinder 15 generierten Auflagedrucksignale D, E an eine Steuereinheit 35 übergeben werden, die über ein Bedienfeld 36 von dem Betreiber 37 des Mähdreschers 1 angesteuert werden kann. Der Betreiber 37 kann über das Bedienfeld 36 beispielsweise Soll-Schnitthöhen 38 und Soll-Auflagedrücke 39 vorgeben. In der Steuereinheit 35 wird über ein Rechnermodul 40 aus den Bodenabstandssignalen A,B, dem Neigungswinkelsignal C und den Auflagedrucksignalen D, E in an sich bekannter Weise eine Ist-Schnitthöhe 34 und ein Ist-Auflagedruck 41 ermittelt. Stimmen diese nicht mit den vordefinierten Werten für die Soll-Schnitthöhe 38 und den Soll-Auflagedruck 39 überein, generiert die Steuereinheit 35 für jeden der annähernd vertikal angeordneten Hubzylinder 9 Steuerbefehle F, die entweder die jeweilige Kolbenstange 10 aus dem Hubzylinder 9 herausschiebt und in diesen hineinführt, sodass das Vorsatzgerät 2 durch Querpendelung eine Änderung der Schnitthöhe 8 erreicht. Eine derartige Ansteuerung hat den Vorteil, dass das Vorsatzgerät rechts- und linksseitig unterschiedlich stark angehoben oder abgesenkt werden kann, sodass auch bei großen Schneidwerksbreiten eine gute Feinabstimmung auf Bodenunebenheiten erreichbar ist. Sind die Abweichung zwischen den Soll- und Ist-Parametern erheblich ist die Steuereinheit 35 auch in der Lage einen Steuerbefehl G zur Ansteuerung der den Schrägförderer 4 verschwenkenden Hubzylinder 15 zu generieren, der das Vorsatzgerät 2 ohne Differenzierung zwischen linker und rechter Seite im Ganzen anhebt oder absenkt.

Die Steuereinheit 35 ist zugleich so ausgelegt, dass sie die von den Neigungssensoren 23, 24 des Trägerfahrzeugs 1 generierten Neigungssignale H, I sowie die von den Drehwinkelsensoren 25 der Radgetriebe 21 generierten Neigungssignale K, L, die ein Maß für die Neigung der jeweiligen Laufradachsen 42 gegenüber dem Maschinengestell 5 sind, in dem Rechnermodul 40 verarbeiten kann. Auf diese Weise wird es möglich die exakte Längs- und Querneigung des Mähdreschers 1 sowie die genaue Position der Laufräder 20 zu bestimmen und diese so zu verändern, dass das Maschinengestell 5 und die mit diesem verbundenen Arbeitsorgane 6 auch in unebenem Gelände eine annähernd horizontale Position einnehmen. Dies erfolgt in der Weise, dass die von den Neigungssensoren 23, 24 generierten Neigungssignale H, I, in dem Rechnermodul 40 der erfindungsgemäßen Steuereinheit 35 zur Definition von Steuerbefehlen M herangezogen werden, die die Hubzylinder 22 des jeweiligen Hangausgleichssystems 19 druckbeaufschlagen oder druckentlasten. Wie bereits beschrieben, führt diese Druckbeaufschlagung oder Druckentlastung zu einem Verschwenken des jeweiligen Laufrades 20 um die Vorderachse 18 des Mähdreschers. Dabei werden die Hangausgleichssysteme 19 der rechten und linken Laufräder 20 separat angesteuert, sodass jedes Laufrad 20 individuell an das in seinem Kontaktbereich mit der Fahrebene 14 herrschende Bodenprofil angepasst werden kann. Aufgrund dessen, dass das Vorsatzgerät 2 über den Schrägförderer 4 mit dem Mähdrescher 1 verbunden ist, wirkt sich jede durch die Hangausgleichssysteme 19 hervorgerufene Lageänderung des Mähdreschers 1 auch auf die Zuordnung des Vorsatzgerätes 2 zur Fahrebene 14 aus, was letztlich zu einer Änderung der Ist-Schnitthöhe 8 führt, die dann in der zuvor beschriebenen Weise nachgeregelt werden muss. Um diese Vielzahl von Regelprozessen einzugrenzen, wird nun in erfindungsgemäßer Weise die bodenkopierende Führung des Vorsatzgerätes 2 mittels der Steuereinheit 35 an die Stellung des jeweiligen Hangausgleichssystems 19 in noch näher zu beschreibender Weise gekoppelt.

Wird zum Ausgleich von Bodenunebenheiten der Mähdrescher 1 zur Wiedererlangung einer horizontalen Ausrichtung durch die Hangausgleichssysteme 19 angehoben führt dies dazu, dass das mit dem am Maschinengestell 5 des Mähdreschers 1 angelenkten Schrägförderer 4 gekoppelte Vorsatzgerät 2 von der Fahrebene 14 in vertikaler Richtung wegbewegt wird. Dabei nimmt die Ist-Schnitthöhe 34 zu und gelangt aus dem in einem Speichermodul 43 hinterlegten Bereich der von dem Betreiber eingegebenen Soll-Schnitthöhe 38. Zugleich fällt der durch die Drucksensoren 28 der den Schrägförderer 4 verschwenkenden Hubzylinder 15 ermittelbare Ist-Auflagedruck 41 unter den ebenfalls zwischenspeicherbaren Soll-Auflagedruck 39. In analoger Weise führt ein Absenken des Mähdreschers 1 zu einem Absinken der Ist-Schnitthöhe 34 unter die vorgegebene Soll-Schnitthöhe 38 sowie zu einem Ansteigen des Ist-Auflagedruckes 41 über den vordefinierten Soll-Auflagedruck 39. Während beim Anheben des Mähdreschers 1 die Zunahme der Ist-Schnitthöhe 8 allenfalls zu Ernteverlusten in der Weise führen kann, dass das Vorsatzgerät bereits am Boden liegendes Erntegut nicht mehr erfasst treten beim bodenunebenheitsbedingten Absenken des Mähdreschers 1 erhebliche Funktionsprobleme auf, da dies zu einem Eingraben des Vorsatzgerätes 2 in den Boden 14 führen würde. Wie bereits beschrieben, wird die Lageänderung jedes Laufrades 20 durch den dem jeweiligen Hangausgleichssystem 19 zugeordneten Drehwinkelsensor 25 in Form von Neigungssignalen K, L erfasst. Diese Neigungssignale K, L stehen der Steuereinheit 35 über das mit dem Rechnermodul 40 gekoppelte Speichermodul 43 abrufbar zur Verfügung. Zudem sind in der Steuereinheit 35 die von dem Drehwinkelsensor 26 des Schrägförderers 4 generierten Neigungssignale C, die ein Maß für den Neigungswinkel 31 des Schrägförderers 4 bilden, verfügbar. Damit nun eine Lageänderung des Mähdreschers 1 unmittelbar eine Anpassung der Position des Schrägförderers 4 und des mit diesem gekoppelten Vorsatzgerätes 2 hervorruft, ist die Steuereinheit 35 so ausgelegt, dass in dem Rechnermodul 40 die Änderung des Verschwenkwinkels 30 der Laufräder 20 unmittelbar zu einer Änderung des Neigungswinkels 31 des Schrägförderers 4 führt. Dies vollzieht sich im einfachsten Fall in der Weise, dass beispielsweise ein Verschwenken der Laufräder 20 entgegen dem Uhrzeigersinn, was einem Anheben des Mähdreschers 1 entspricht, zugleich zum Verschwenken des Schrägförderers 4 entgegen dem Uhrzeigersinn und damit zum Absenken des Schrägförderers 4 führt. Im entgegengesetzten Fall ruft das Verschwenken der Laufräder 20 im Uhrzeigersinn zugleich ein Verschwenken des Schrägförderers 4 im Uhrzeigersinn hervor. Auf diese Weise wird sichergestellt, dass die Lageänderung des Mähdreschers 1 aufgrund von Bodenunebenheiten im Bereich der Laufräder 20 des Mähdreschers 1 zugleich eine Anpassung der Lage des Schrägförderers 2 in der Weise bewirkt, dass die Position des Vorsatzgerätes 2 über der Fahrebene 14 im Wesentlichen unbeeinflusst von der Lageänderung des Mähdreschers 1 bleibt. Im dargestellten Ausführungsbeispiel wird diese Lageänderung des Schrägförderers 4 dadurch realisiert, dass in dem Rechnermodul 40 aus den in den Hangausgleichssystemen 19 generierten Neigungssignalen K, L und den am Schrägförderer 4 generierten Neigungssignalen C Steuerbefehle G zur Druckbeaufschlagung oder Druckentlastung der den Schrägförderer 4 verschwenkenden Hubzylinder 15 generiert werden. Es liegt im Rahmen der Erfindung, dass die Koppelung der bodenkopierenden Funktion des Vorsatzgerätes 2 an die Lageänderung der Arbeitsmaschine 1 auch dadurch in der Steuereinheit 35 realisiert werden kann, dass die vorgegebenen Soll-Schnitthöhen 38 und Soll-Auflagedrücke 39 in Abhängigkeit von den Neigungssignalen (K, L) der Drehwinkelsensoren 25 der Hangausgleichssysteme 19 und der Neigungssignale C des Drehwinkelsensors 26 des Schrägförderers 4 in dem Rechnermodul 40 zu korrigierten Soll-Schnitthöhen 41 und korrigierten Soll-Auflagedrücken 39 verrechnet werden und die bodenkopierende Funktion des Vorsatzgerätes 2 auf der Basis dieser korrigierten Werte in der beschriebenen Weise erfolgt.

Da der Schrägförderer 4 in der Regel nur um eine quer zur Fahrtrichtung FR orientierte Schwenkachse 17 verschwenkbar ist, die beidseitig an der Vorderachse 18 angeordneten Laufräder 20 jedoch unabhängig voneinander über das jeweilige Hangausgleichssystem 19 verschwenkbar sind, könnte dies dazu führen, dass sich zudem die Querneigung des Vorsatzgerätes 2 in Abhängigkeit von der Lageänderung des Mähdreschers 1 verändert. Indem die an dem Maschinengestell 5 des Mähdreschers 1 fixierten Neigungssensoren 23, 24 als Längs- und Querneigungssensoren ausgebildet sind, stehen dem Rechnermodul 40 der Steuereinheit 35 über die von den Neigungssensoren 23, 24 generierten Neigungssignale H, konkrete Informationen über die Neigungsänderung des Mähdreschers 1 zur Verfügung. Diese Informationen können in dem Rechnermodul 40 zu Steuerbefehlen F verrechnet werden; die die zur Steuerung der Querpendelung des Vorsatzgerätes 2 an dem Schrägförderer 4 angeordneten Hubzylinder 9 unabhängig voneinander druckbeaufschlagen oder druckentlasten, sodass die trägerfahrzeugbedingte Querneigungsänderung weitgehend kompensiert werden kann. Auf diese Weise bleiben die von dem Vorsatzgerät 2 realisierte Ist-Schnitthöhe 34 sowie der Ist-Auflagedruck 41 im Wesentlichen auch unbeeinflusst von der Querneigungsänderung des Trägerfahrzeugs 1.

Es liegt im Rahmen der Erfindung, dass in dem Speichermodul 38 zudem in nicht näher dargestellter Weise Grenzwerte für die Ist-Schnitthöhe 34 sowie den Ist-Auflagedruck 41 auf Basis der vorgebbaren Soll-Schnitthöhe 38 sowie des Soll-Auflagedruckes 39 hinterlegt sein können oder errechenbar sind, sodass die Regelung der Ist-Schnitthöhe 34 und des Ist-Auflagedruckes 41 durch die Steuereinheit 35 gedämpft erfolgt. Dies hat insbesondere den Vorteil, dass eine gleichmäßigere Führung des Vorsatzgerätes 2 über der Fahrebene 14 erreicht wird, wobei die belastungsreduzierende, die Lebensdauer erhöhende ruhigere Führung des Schneidwerks 2 durch eine geringfügige Schwankung der Schnitthöhe 8 erkauft wird.

Es liegt im Rahmen des Könnens eines Fachmanns das hier am Beispiel eines Mähdreschers beschriebene Verfahren und die zugehörige Vorrichtung an beliebigen Arbeitsmaschinen deren an dem Trägerfahrzeug adaptierten Arbeitsorgane und das Trägerfahrzeug selbst in Abhängigkeit von Reliefänderungen des Bodens eine Positionsänderung erfahren einzusetzen, um die beschriebenen Effekte zu erzielen, ohne dabei den Rahmen der Erfindung zu verlassen.

### Bezugszeichenliste:

- 1: landwirtschaftliche Arbeitsmaschine
- 2: Vorsatzgerät
- 3: Schneidwerk
- 4: Schrägförderer
- 5: Maschinengestell
- 6: Arbeitsorgane
- 7: Schneideinrichtung
- 8: Schnitthöhe
- 9: Hubzylinder
- 10: Kolbenstange
- 11: Führungsbolzen
- 12: Langlochführung
- 13: Tastbügel
- 14: Fahrebene
- 15: Hubzylinder
- 16: Konsole
- 17: Schwenkachse
- 18: Vorderachse
- 19: Hangausgleichssystem
- 20: Laufrad
- 21: Radgetriebe
- 22: Hubzylinder
- 23: Neigungssensor
- 24: Neigungssensor
- 25: Drehwinkelsensor
- 26: Drehwinkelsensor
- 27: Drehpotentiometer
- 28: Drucksensor
- 29: Drucksensor
- 30: Verschwenkwinkel
- 31: Neigungswinkel
- 32: Leitungssystem
- 33: Leitungssystem
- 34: Ist-Schnitthöhe
- 35: Steuereinheit
- 36: Bedienfeld
- 37: Betreiber
- 38: Soll-Schnitthöhe
- 39: Soll-Auflagedruck
- 40: Rechnermodul
- 41: Ist-Auflagedruck
- 42: Laufradachse
- 43: Speichermodul

- A, B: Bodenabstandssignal
- C: Neigungssignal
- D, E: Auflagedrucksignal
- F, G: Steuerbefehl
- H, I: Neigungssignal
- K, L: Neigungssignal
- M: Steuerbefehl

- FR: Fahrtrichtung

## Patentansprüche

1. Verfahren zur Bodenkopierung für Vorsatzgeräte an einer landwirtschaftlichen Arbeitsmaschine, mit einem Maschinengestell und zumindest einem Hangausgleichssystem, mit dem das Maschinengestell gegenüber einer Fahrebene ausrichtbar ist sowie einem Vorsatzgerät, das an einem höhenveränderlichen Schrägförderer angeordnet ist und einer Steuerung mit der das Vorsatzgerät bodenkopierend verschwenkbar ist,
**dadurch gekennzeichnet,**
**dass** die bodenkopierende Steuerung (35) des Vorsatzgerätes (2) die Lageänderung der Arbeitsmaschine (1) gegenüber der Fahrebene (14) berücksichtigt.

2. Verfahren zur Bodenkopierung für Vorsatzgeräte an einer landwirtschaftlichen
Erntemaschine (1) nach Anspruch 1,
**dadurch gekennzeichnet,**
**dass** die Lageänderung der Arbeitsmaschine (1) zur Fahrebene (14) durch die Stellung des zumindest einen Hangausgleichssystems (19) gegenüber dem Maschinengestell (5) und/oder durch mit dem Maschinengestell (5) verbundene Neigungssensoren (23, 24) bestimmt wird.

3. Verfahren zur Bodenkopierung für Vorsatzgeräte an einer landwirtschaftlichen Erntemaschine nach einem der vorangegangenen Ansprüche,
**dadurch gekennzeichnet,**
**dass** die Stellung des Hangausgleichssystems (19) zum Maschinengestell (5) von einem Drehwinkelsensor (25) detektiert und in Neigungssignalen (G, H) abgebildet wird.

4. Verfahren zur Bodenkopierung für Vorsatzgeräte an einer landwirtschaftlichen Erntemaschine nach einem der vorangegangenen Ansprüche,
**dadurch gekennzeichnet,**
**dass** das zumindest eine Hangausgleichssystem (19) schwenkbeweglich mit der Vorderachse (18) der Arbeitsmaschine (1) gekoppelt ist und der Drehwinkelsensor (25) zwischen einem Radgetriebe (21) des Hangausgleichssystems (19) und der Vorderachse (18) der Arbeitsmaschine (1) angeordnet ist, und einen Drehwinkel (30) zwischen dem Radgetriebe (21) und der Vorderachse (18) detektiert.

5. Verfahren zur Bodenkopierung für Vorsatzgeräte an einer landwirtschaftlichen Erntemaschine nach einem der vorangegangenen Ansprüche,
**dadurch gekennzeichnet,**
**dass** die Stellung des an den Schrägförderer (4) adaptierten Vorsatzgerätes (2) von einem mit dem Schrägförderer (4) in Wirkverbindung stehenden Drehwinkelsensor (26) detektiert und in Neigungssignalen (C) des Schrägförderers (4) abgebildet wird.

6. Verfahren zur Bodenkopierung für Vorsatzgeräte an einer landwirtschaftlichen Erntemaschine nach Anspruch 5,
**dadurch gekennzeichnet,**
**dass** das Neigungssignal (C) von einem Drehwinkelsensor (26) generiert wird, der im Bereich der Drehachse (17) des Schrägförderers (4) angeordnet ist und einen Drehwinkel (31) zwischen dem Schrägförderer (4) und dem Maschinengestell (5) detektiert.

7. Verfahren zur Bodenkopierung für Vorsatzgeräte an einer landwirtschaftlichen Erntemaschine nach einem der vorangegangenen Ansprüche,
**dadurch gekennzeichnet,**
**dass** die der Arbeitsmaschine (1) zugeordneten Neigungssensoren (23, 24) die Längs- und Querneigung der Arbeitsmaschine (1) erfassen und diese Längsund Querneigungen in Neigungssignalen (K, L) abbilden.

8. Verfahren zur Bodenkopierung für Vorsatzgeräte an einer landwirtschaftlichen Erntemaschine nach einem der vorangegangenen Ansprüche,
**dadurch gekennzeichnet,**
**dass** die bodenkopierende Steuerung (35) einen Längs- und Querneigungsausgleich des Vorsatzgerätes (2) ermöglicht, wobei der Längsneigungsausgleich des Vorsatzgerätes (2) durch Verschwenken des Schrägförderers (4) und der Querneigungsausgleich durch Verschwenken des Vorsatzgerätes (2) quer zur Fahrtrichtung (FR) und relativ zum Schrägförderer (4) erfolgt.

9. Verfahren zur Bodenkopierung für Vorsatzgeräte an einer landwirtschaftlichen Erntemaschine nach einem der vorangegangenen Ansprüche,
**dadurch gekennzeichnet,**
**dass** die bodenkopierende Steuerung (35) des Vorsatzgerätes in Abhängigkeit von Soll-Schnitthöhen (38) und Soll-Auflagedrücken (39) Ist-Schnitthöhen (34) und Ist-Auflagedrücke (41) an dem Vorsatzgerät (2) einregelt und wobei die Steuerung (35) zur Realisierung dieses Regelprozesses über ein Rechnermodul (40) und ein diesem zugeordnetes Speichermodul (43) verfügt und die Soll-Schnitthöhen (38) und die Soll-Auflagedrücke (39) editierbar sind.

10. Verfahren zur Bodenkopierung für Vorsatzgeräte an einer landwirtschaftlichen Erntemaschine nach einem der vorangegangenen Ansprüche,
**dadurch gekennzeichnet,**
**dass** die Steuerung (35) die Soll-Schnitthöhe (41) unter Einbeziehung der Neigungssignale (K, L) der Drehwinkelsensoren (25) des Hangausgleichssystems (19) und der Neigungssignale (C) des Drehwinkelsensors (26) des Schrägförderers (4) in dem Rechnermodul (40) zu einer korrigierten Soll-Schnitthöhe (41) verrechnet.

11. Verfahren zur Bodenkopierung für Vorsatzgeräte an einer landwirtschaftlichen Erntemaschine nach einem der vorangegangenen Ansprüche,
**dadurch gekennzeichnet,**
**dass** die Steuerung (35) die Soll-Auflagedrücke (39) unter Einbeziehung der Neigungssignale (K, L) der Drehwinkelsensoren (25) des Hangausgleichssystems (19) und der Neigungssignale (C) des Drehwinkelsensors (26) des Schrägförderers (4) in dem Rechnermodul (40) zu korrigierten Soll-Auflagedrücken (41) verrechnet.

12. Verfahren zur Bodenkopierung für Vorsatzgeräte an einer landwirtschaftlichen Erntemaschine nach einem der vorangegangenen Ansprüche,
**dadurch gekennzeichnet,**
**dass** die Steuerung (35 ) mit der korrigierten Soll-Schnitthöhe (34) und dem korrigierten Soll-Auflagedruck (39) die Lage des Vorsatzgerätes (2) gegenüber der Fahrebene (14) regelt.

13. Verfahren zur Bodenkopierung für Vorsatzgeräte an einer landwirtschaftlichen Erntemaschine nach einem der vorangegangenen Ansprüche,
**dadurch gekennzeichnet,**
**dass** die vertikale Lageänderung des Vorsatzgerätes (2) durch Druckbeaufschlagung oder Druckentlastung von den Schrägförderer (4) schwenkbeweglich führenden Hubzylinder (15) und die Lageänderung des Vorsatzgerätes (2) quer zur Fahrtrichtung (FR) durch Druckbeaufschlagung oder Druckentlastung von das Vorsatzgerät (2) pendelnd an dem Schrägförderer (4) führenden Hubzylindern (9) realisiert wird.

14. Verfahren zur Bodenkopierung für Vorsatzgeräte an einer landwirtschaftlichen Erntemaschine nach Anspruch 13,
**dadurch gekennzeichnet,**
**dass** die Druckbeaufschlagung oder Druckentlastung der Hubzylinder (9, 15) durch von der Steuereinrichtung (35) generierte Steuerbefehle (F, G) bewirkt wird.

15. Vorrichtung zur Bodenkopierung für Vorsatzgeräte an einer landwirtschaftlichen Arbeitsmaschine, mit einem Maschinengestell und zumindest einer Hangausgleichseinrichtung, mit der das Maschinengestell gegenüber einer Fahrebene ausrichtbar ist sowie einem frontseitigem Vorsatzgerät, das an einem höhenveränderlichem Schrägförderer angeordnet ist und einer Steuerung mit der das Vorsatzgerät bodenkopierend verschwenkbar ist,
**dadurch gekennzeichnet,**
**dass** die Arbeitsmaschine (1) ein oder mehrere Sensoren (23, 24, 25) zur Bestimmung der Lage der Arbeitsmaschine (1) und/oder des zumindest einen Hangausgleichssystems (19) aufnimmt und die von diesen Sensoren (23, 24, 25) generierten Signale (H, I, K, L) an eine Steuereinheit (35) übergeben werden, wobei in der Steuereinheit (35) Soll-Schnitthöhen (38) und Soll-Auflagedrücke (39) editierbar hinterlegt sind und in der Steuereinheit (35) in Abhängigkeit von den Signalen (H. I. K. L) korrigierte Soll-Schnitthöhen (38) und korrigierte Soll-Auflagedrücke (39) sowie Steuerbefehle (F, G) an das Vorsatzgerät (2) höhen- und querbeweglich führende Verstellelemente (9, 15) übermittel werden, sodass die bodenkopierende Führung des Vorsatzgerätes (2) in Abhängigkeit von der Lageänderung der Arbeitsmaschine (1) erfolgt.
